# EUROPÄISCHE PATENTSCHRIFT

(11) **EP 2 126 294 B1**
(45) Veröffentlichungstag und Bekanntmachung des Hinweises auf die Patenterteilung: **22.09.2010**
(21) Anmeldenummer: 08716199.8
(22) Anmeldetag: 03.03.2008
(51) Int. Cl.: F01N 1/08, F01N 3/28

(54) **ABGASNACHBEHANDLUNGSEINRICHTUNG EINES KRAFTFAHRZEUGS**
EXHAUST GAS AFTERTREATMENT DEVICE OF A MOTOR VEHICLE
DISPOSITIF DE POST-TRAITEMENT DES GAZ D'ÉCHAPPEMENT D'UN VÉHICULE AUTOMOBILE

(30) Priorität: 03.03.2007 DE 102007010486
(43) Veröffentlichungstag der Anmeldung: 02.12.2009
(73) Patentinhaber: J. Eberspächer GmbH & Co. KG, 73730 Esslingen (DE)
(72) Erfinder: HÜTHWOHL, Georg, 59494 Soest (DE); KÄSTNER, Thomas, 44229 Dortmund (DE)
(74) Vertreter: Diehl & Partner GbR
(86) Internationale Anmeldenummer: PCT/EP2008/001680
(87) Internationale Veröffentlichungsnummer: WO 2008/107151

(56) Entgegenhaltungen:
- EP-A- 1 536 113
- CA-A1- 1 262 869
- DE-A1- 19 514 829
- JP-A- 2001 050 027
- JP-A- 2004 150 310
- US-A- 3 337 939
- US-A- 5 392 602

## Beschreibung

### Technischer Hintergrund der Erfindung

### Technisches Gebiet

Die Erfindung betrifft eine Abgasnachbehandlungseinrichtung eines Kraftfahrzeugs, welche einen hohlzylindrischen Gehäusemantel aufweist, in dessen Innerem ein Abgaskatalysator sowie eine Einströmkammer zur Aufnahme von durch den Abgaskatalysator zu reinigendem Abgas angeordnet sind. Dabei ist die Einströmkammer von einem ersten Bodenteil und einem dem ersten Bodenteil mit Abstand gegenüberliegenden zweiten Bodenteil begrenzt.

### Kurze Beschreibung des Standes der Technik

Aus der DE 101 23 359 A1 ist eine Abgasnachbehandlungseinrichtung eines Kraftfahrzeugs mit einem hohlzylindrischen Gehäusemantel bekannt, wobei im Inneren des Gehäusemantels ein Abgaskatalysator sowie eine Einströmkammer zur Aufnahme von durch den Abgaskatalysator zu reinigendem Abgas angeordnet sind. Die Einströmkammer ist dabei von einem ersten Bodenteil und einem den ersten Bodenteil mit Abstand gegenüber liegenden zweiten Bodenteil begrenzt.

Derartige Abgasnachbehandlungseinrichtungen stellen insbesondere bei Einsatz in Nutzfahrzeugen schon allein aufgrund ihrer Gehäusegröße einen beachtlichen Kostenfaktor dar.

Aus dem Dokument JP 2004 150310 A ist eine Abgasnachbehandlungseinrichtung mit einem Katalysatorelement bekannt, welches in einer von zwei Bodenteilen und einem Mantel gebildeten Kammer angeordnet ist.

### Zusammenfassung der Erfindung

Es ist daher eine Aufgabe der Erfindung, eine Abgasnachbehandlungseinrichtung mit einer vorteilhaften Raumaufteilung anzugeben.

Die vorstehende Aufgabe wird durch die Kombination der Merkmale des unabhängigen Anspruchs 1 gelöst. Vorteilhafte Weiterbildungen finden sich in den Unteransprüchen.

Gemäß einer Ausführungsform weist die Abgasnachbehandlungseinrichtung eine Einströmkammer zur Aufnahme von durch den Abgaskatalysator zu reinigendem Abgas auf, welche außer von einem ersten und einem zweiten Bodenteil von einem die Bodenteile in gasdichter Verbindung umschließenden Mantelteil begrenzt ist. Somit ist die Einströmkammer als ein vom Gehäusemantel der Abgasnachbehandlungseinrichtung getrennter Bestandteil ausgebildet, wodurch eine erhöhte Flexibilität bei der geometrischen und materialspezifischen Ausgestaltung ermöglicht ist. Insbesondere werden durch die erfindungsgemäße Ausführungsform Konzeptions-Nachteile vermieden, die sich ergeben können, wenn der Gehäusemantel der Abgasnachbehandlungseinrichtung selbst als Begrenzung der Einströmkammer dient. Der Gehäusemantel der Abgasnachbehandlungseinrichtung umgibt bei dieser Ausführungsform die Einströmkammer und ist konzentrisch zum Mantelteil der Einströmkammer orientiert. Das Volumen bzw. die Größe der Einströmkammer kann durch eine Wahl des Abstands der vorzugsweise parallel zueinander orientierten Bodenteile maßgeblich bestimmt werden.

Erfindungsgemäß sind das erste und das zweite Bodenteil sowie das Mantelteil aus einem ersten Material mit einer hohen Korrosionsbeständigkeit und der Gehäusemantel aus einem zweiten Material mit einer demgegenüber geringeren Korrosionsbeständigkeit gefertigt.

Typischerweise handelt es sich bei dem ersten Material um korrosionsbeständigen Edelstahl und bei dem zweiten Material um niedriglegiertes und damit im Vergleich zum ersten Material kostengünstigeres Blech. Da typischerweise die aus dem ersten Material gefertigten, die Einströmkammer begrenzenden Teile einen vergleichsweise geringen Materialanteil der Abgasnachbehandlungseinrichtung bzw. des Gehäuses ausmachen, ist der Einsatz des vergleichsweise teuren ersten Materials auf diesen geringen Anteil begrenzt. Auf diese Weise sind die Gesamtkosten für die lediglich zu einem geringen Anteil aus Edelstahl gefertigte Abgasnachbehandlungseinrichtung im Vergleich zu einer überwiegend aus Edelstahl gefertigten Abgasnachbehandlungseinrichtung vermindert.

Trotz der Fertigung des Gehäusemantels aus einem Material mit vergleichsweise geringer Korrosionsbeständigkeit kann eine sehr gute Dauerhaltbarkeit erreicht werden. Dies liegt darin begründet, dass aufgrund der Konstruktion der Abgasnachbehandlungseinrichtung der Gehäusemantel lediglich mit bereits durch den Abgaskatalysator gereinigtem und damit wenig korrosivem Abgas in Berührung kommt. Die mit ungereinigtem Abgas in Berührung kommenden Teile der Abgasnachbehandlungseinrichtung bzw. des Gehäuses, welche die Bodenteile und das Mantelteil der Einströmkammer umfassen, sind hingegen entsprechend ihrer höheren Korrosionsbeanspruchung widerstandsfähiger ausgeführt.

In Ausgestaltung der Erfindung ist ein einströmseitiges Ende des Abgaskatalysators in der Einströmkammer angeordnet. Dabei durchdringt der für den Korpus des eigentlichen Katalysatorkörpers vorgesehene weitere zylindrische Mantelteil ein Bodenteil derart, dass ringsum eine gasdichte Verbindung mit dem Bodenteil gegeben ist. Auf diese Weise wird in die Einströmkammer einströmendes Abgas aufgrund einer fehlenden anderen Ausströmmöglichkeit zum Eintritt in den Abgaskatalysator gezwungen. Das Bodenteil dient dabei in vorteilhafter Weise gleichzeitig als mechanische Stütze und Halterung für den Abgaskatalysator.

In weiterer Ausgestaltung der Erfindung ist ein in die Einströmkammer ausmündendes Zuführrohr vorgesehen, über welches mit einem Reduktionsmittel angereichertes Abgas in die Einströmkammer eingebracht werden kann. Gemäß einer Ausführungsform ist das Zuführrohr ebenfalls aus einem Material mit hoher Korrosionsbeständigkeit, insbesondere ebenfalls aus dem ersten Material gefertigt. Damit ist gewährleistet, dass auch auf dem Wege der Zuführung des korrosiven, ungereinigten Abgases keine Korrosion von diesbezüglich exponierten Teilen auftritt. Eine erhöhte Korrosionsbeständigkeit ist insbesondere deshalb vorteilhaft, weil mit dem Reduktionsmittel angereichertes Abgas eine nochmals erhöhte Korrosivität aufweist.

Dies ist insbesondere der Fall, wenn, wie vorzugsweise vorgesehen, als Reduktionsmittel Harnstoff oder ein anderes, Ammoniak freisetzendes Reduktionsmittel eingesetzt wird.

In weiterer Ausgestaltung der Erfindung weist die Abgasnachbehandlungseinrichtung eine an die Einströmkammer angrenzende und zur Aufnahme von durch den Abgaskatalysator gereinigtem Abgas vorgesehene Sammelkammer auf. Auf diese Weise kann eine platzsparende und strömungsgünstige Bauweise erzielt werden.

Diese wird weiterhin verbessert, wenn in weiterer Ausgestaltung der Erfindung für die Abgasnachbehandlungseinrichtung ein Überleitungsrohr vorgesehen ist, über welches vom Abgaskatalysator gereinigtes Abgas von der Ausströmseite des Abgaskatalysators in die Sammelkammer geleitet werden kann.

In weiterer Ausgestaltung der Erfindung ist das Überleitungsrohr abschnittsweise perforiert ausgeführt. Dadurch ergibt sich eine schalldämmende Wirkung. Aufgrund der dadurch erzielten Geräuschverminderung kann gegebenenfalls auf einen separaten Schalldämpfer verzichtet werden.

In weiterer Ausgestaltung der Erfindung erstrecken sich das Zuführrohr und/oder das Überleitungsrohr über den wesentlichen Teil ihrer Länge innerhalb des Gehäusemantels bzw. innerhalb des vom Gehäusemantel gebildeten Hohlzylinders entlang des Abgaskatalysators. Durch eine langgestreckte Ausführung des Zuführrohrs ist längs des Abgaszuführweges eine optimale Aufbereitung von dem Abgas zugesetztem Reduktionsmittel ermöglicht. Dies ist insbesondere im Falle von Harnstoff oder einem anderen Ammoniak freisetzenden Reduktionsmittel vorteilhaft, da eine ausreichende Hydrolysierung des Reduktionsmittels auf dem Zuführweg ermöglicht ist. Bei einer langgestreckten Ausführung des Überleitungsrohres ist hingegen insbesondere in Verbindung mit dessen Perforierung eine vorteilhafte Geräuschdämpfung ermöglicht. Weiterhin ist eine kompakte Ausführung des Gehäuses ermöglicht, da Zuführrohr und/oder Überleitungsrohr vorteilhaft in sich ergebende Freiräume des Gehäuses integriert werden können. Dies ist insbesondere dann der Fall, wenn in weiterer Ausgestaltung der Erfindung die Abgasnachbehandlungseinrichtung zur Aufnahme eines aus wenigstens zwei separaten Katalysatorelementen gebildeten Abgaskatalysators ausgebildet ist. Wenn das Gehäuse der Abgasnachbehandlungseinrichtung mehr als einen Katalysatorkörper aufnimmt, ergeben sich Zwischenräume im Gehäuse, welche in vorteilhafter Weise für die Anordnung des Zuführrohrs bzw. des Überleitungsrohrs genutzt werden können. Dies ist insbesondere dann der Fall, wenn eine parallele Anordnung von zwei oder mehr Katalysatorelementen vorgesehen ist. Weiter ist dies insbesondere dann der Fall, wenn die Katalysatorelemente für sich betrachtet jeweils eine in etwa zylindrische Form aufweisen, und der Ein- und Austritt des Abgases an der unteren bzw. oberen Grundfläche des Zylinders erfolgt.

In weiterer Ausgestaltung der Erfindung ist die Abgasnachbehandlungseinrichtung derart ausgebildet, dass ein erstes und ein zweites der wenigstens zwei Katalysatorelemente ausgehend von der Einströmkammer in entgegengesetzten Richtungen von dem zu reinigenden Abgas durchströmt werden können. Auf diese Weise können Katalysatorelemente räumlich hintereinander in demselben Gehäuse angeordnet werden, wodurch eine schlanke Bauform erreicht wird. Dadurch ergeben sich in vielen Fällen Einbauvorteile. Je nach Anzahl und Ausführung der Katalysatorelemente kann auf diese Weise auch ein günstiges Verhältnis von Oberfläche und Volumen und damit eine Materialeinsparung erzielt werden.

In weiterer Ausgestaltung der Erfindung ist der Gehäusemantel aus einem Blechzuschnitt mit zwei einander gegenüberliegenden Seiten gefertigt, wobei die einander gegenüberliegenden Seiten unter Bildung eines Hohlzylinders durch Falzen miteinander verbunden sind. Dadurch wird eine besonders kostengünstige Fertigung bzw. Ausführung des Gehäuses und damit der gesamten Abgasnachbehandlungseinrichtung erreicht. Die Falzung kann so ausgestaltet sein, dass ein gewisses Maß an Leckage toleriert ist, was jedoch unkritisch ist, da der Gehäusemantel lediglich von durch den Abgaskatalysator gereinigtem Abgas beaufschlagt ist.

### Kurze Beschreibung der Figuren

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen.

Dabei zeigen:
- Fig. 1: eine Gesamtansicht einer vorteilhaften Ausführungsform der erfindungsgemäßen Abgasnachbehandlungseinrichtung,
- Fig. 2: eine erste Innenansicht der Abgasnachbehandlungseinrichtung gemäß Fig. 1,
- Fig. 3: eine zweite Innenansicht der Abgasnachbehandlungseinrich- tung gemäß Fig. 1,
- Fig. 4: eine erste Ansicht betreffend den Zusammenbau der Abgasnachbehandlungseinrichtung gemäß Fig. 1 und
- Fig. 5: eine zweite Ansicht betreffend den Zusammenbau der Abgasnachbehandlungseinrichtung gemäß Fig. 1.

### Detaillierte Beschreibung beispielhafter Ausführungsformen

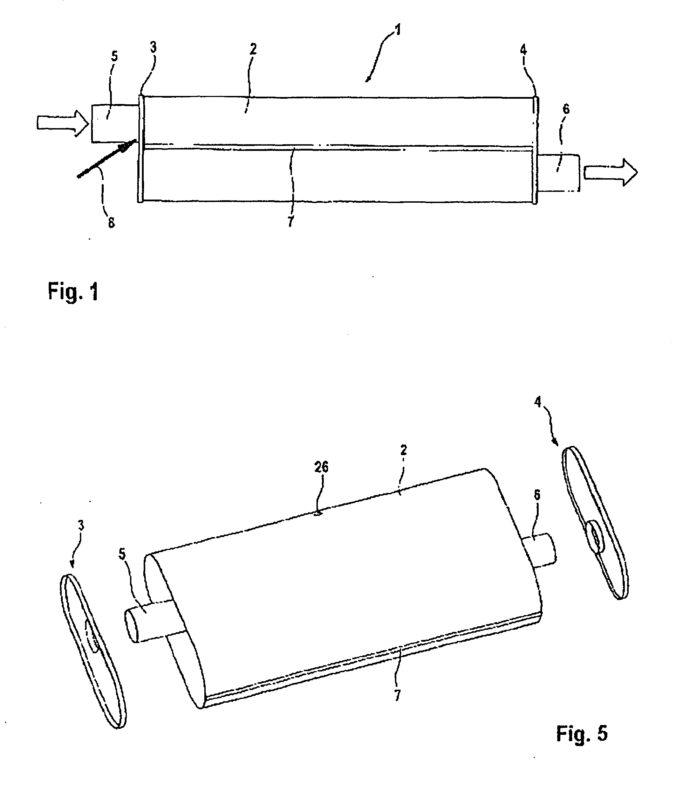

Fig. 1 zeigt eine vorteilhafte Ausführungsform der erfindungsgemäßen Abgasnachbehandlungseinrichtung 1 in einer einen fertig montierten Zustand darstellenden Gesamtansicht von außen. Entsprechend den dargestellten Pfeilen erfolgt der Abgaseintritt von der linken Seite über ein Zuführrohr 5. Gereinigtes Abgas verlässt über ein Auslassrohr 6 die Abgasnachbehandlungseinrichtung 1. Das Gehäuse der Abgasnachbehandlungseinrichtung 1 umfasst einen hohlzylindrischen Gehäusemantel 2, welcher an den Enden von einem ersten Verschlussdeckel 3 bzw. einem zweiten Verschlussdeckel 4 abgeschlossen ist. Erfindungsgemäß ist vorgesehen, den Gehäusemantel 2 aus einem kostengünstigen Material wie beispielsweise einem feueraluminierten Feinbleich auszuführen. Dieses kann im Ausgangszustand aus einem Blechzuschnitt gebildet sein, welchem eine vorgebbare zylindrische Form gegeben wird. Auf in fertigungstechnischer Hinsicht vorteilhafte Weise können zwei sich gegenüberliegende Seiten des Blechzuschnitts durch eine Falzverbindung 7 miteinander verbunden werden. Damit ergibt sich der umfangsseitige Gehäuseteil der Abgasnachbehandlungseinrichtung 1. Desgleichen können die Verschlussdeckel 3, 4 aus demselben Material wie der Gehäusemantel 2 gefertigt sein. Auf diese Weise ist eine besonders unproblematische und zuverlässige randseitige Verbindung der Verschlussdeckel 3, 4 mit dem Gehäusemantel 2 ermöglicht. An den Durchtrittsöffnungen für das Zuführrohr 5 und das Auslassrohr 6 können Umfalzungen vorgesehen sein, die ringsum mit dem Zuführrohr 5 und dem Auslassrohr 6 verbunden sind.

Das Zuführrohr 5 ist bevorzugt aus einem Material gefertigt, welches im Vergleich zum Gehäusemantel 2 eine höhere Korrosionsbeständigkeit aufweist. Damit wird der Tatsache Rechnung getragen, dass das der Abgasnachbehandlungseinrichtung 1 zugeführte Abgas eine erhöhte Korrosivität aufweisen kann. Vorzugsweise wird für das Zuführrohr 5 ein austenitischer Edelstahl eingesetzt. Je nach Korrosivität des Abgases kann auch ein anderes Edelstahlmaterial, beispielsweise ein ferritischer Edelstahl eingesetzt werden.

Obschon die erfindungsgemäße Abgasnachbehandlungseinrichtung 1 zur Abgasreinigung bei unterschiedlichen Brennkraftmaschinen einsetzbar ist, ist sie in vorteilhafter Weise zur Entfernung von Stickoxiden aus dem Abgas von Nutzfahrzeug-Dieselmotoren konzipiert. Hierfür ist im Inneren der Abgasnachbehandlungseinrichtung 1 ein SCR-Modul (SCR = selective catalytic reduction) mit vorzugsweise mehreren SCR-Katalysatoren zur selektiven Reduktion von Stickoxiden mittels Ammoniak oder einem anderen selektiven Stickoxid-Reduktionsmittel vorgesehen, was in den nachfolgenden Figuren im Detail dargestellt ist. Eine Reduktionsmittelzugabe 8, beispielsweise von wässriger Harnstofflösung, erfolgt von außen mittels einer nicht dargestellten Zugabevorrichtung in das Zuführrohr 5. Der Ort der Abgabe des Reduktionsmittels ins Abgas kann dabei sowohl innerhalb als auch außerhalb des Gehäuses liegen. Im letzteren Fall kann die Reduktionsmittelzugabe 8 zum Abgas in unmittelbarer Nähe des Abgaseintritts vorgesehen sein. Es kann vorgesehen sein, die Zugabevorrichtung an der Abgasnachbehandlungseinrichtung 1, bzw. an deren Gehäuse zu befestigen, wodurch ein leicht austauschbares und montierbares Gesamtmodul gebildet wird.

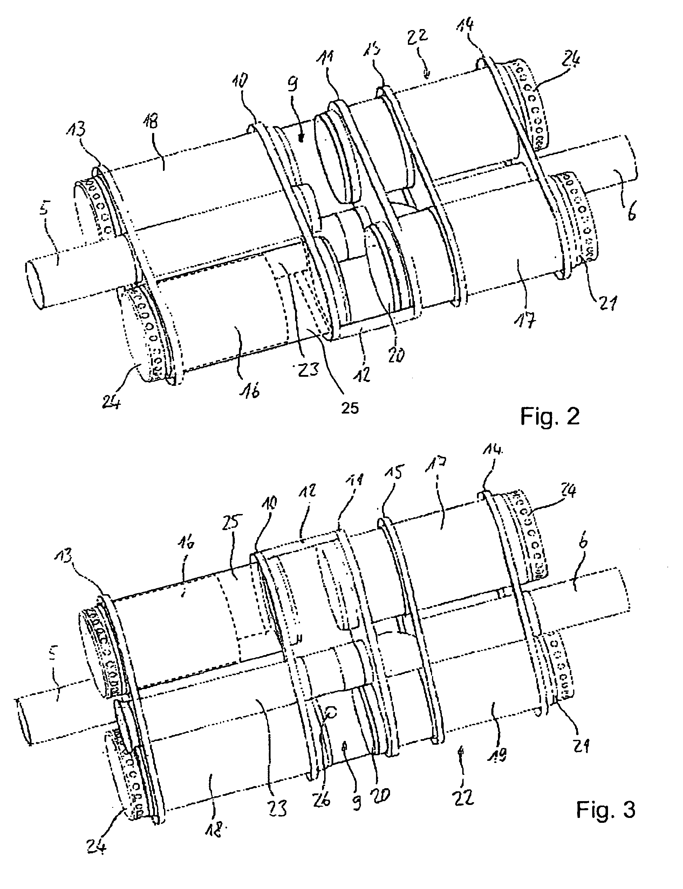

Die Figuren 2 und 3 zeigen die Abgasnachbehandlungseinrichtung 1 gemäß Fig. 1 in unterschiedlichen perspektivischen Ansichten jeweils mit abgenommenem Gehäusemantel 2 und entfernten Verschlussdeckeln 3, 4. In der dargestellten bevorzugten Ausführungsform sind vier separate SCR-Katalysatorelemente 16, 17, 18, 19 vorgesehen. Dabei sind jeweils zwei nebeneinander angeordnete Katalysatorelemente 16, 18 bzw. 17, 19 strömungsmäßig parallel geschaltet. Der Einsatz von weniger oder auch mehr Katalysatorelementen ist natürlich ebenfalls möglich. Vorzugsweise umfassen die Katalysatorelemente 16, 17, 18, 19 jeweils einen monolithischen Katalysatorkern in Wabenkörperbauform und einen diesen umgebenden, bevorzugt aus Edelstahl gefertigten Metallmantel 25 mit einer geringen Stärke von etwa 1,5 mm. In diesem ist der Katalysatorkern vorzugsweise mit einer umgebenden Lagermatte als Ausgleichs-, Isolier- und Schutzelement angeordnet. Der Katalysatorkern kann den Metallmantel bezüglich dessen Längserstreckung größtenteils oder nur zu einem kleineren Teil ausfüllen. Auf diese Weise können in ein und derselben Abgasnachbehandlungseinrichtung 1 Katalysatorkerne unterschiedlicher Größe angeordnet sein. Ebenfalls möglich ist eine Ausstattung der Abgasnachbehandlungseinrichtung 1 mit Katalysatorkernen gleicher Größe, welche jedoch individuell, beispielsweise angepasst an die Motorgröße gewählt werden können. Weiterhin ist es möglich, in einem Metallmantel 25 zwei oder mehr voneinander beabstandete Katalysatorkerne, gegebenenfalls mit unterschiedlichen katalytischen Eigenschaften, anzuordnen. Beispielsweise kann ein Oxidationskatalysatorelement stromauf und/oder stromab von einem SCR-Katalysatorelement in ein und demselben Metallmantel 25 angeordnet sein. Auf diese Weise kann eine weiter verbesserte und umfassendere Abgasreinigung erzielt werden. Dabei soll unter einem Katalysatorkern im weitesten Sinn auch ein Partikelfilterkörper als umfasst angesehen werden. Der Einfachheit halber wird nachfolgend für die möglichen beschriebenen Anordnungen als einem Katalysatorelement gesprochen.

Nachfolgend wird zum besseren Verständnis der sich infolge des erfindungsgemäßen Aufbaus ergebende Abgasströmungsweg im Inneren der Abgasnachbehandlungseinrichtung 1 erläutert. Das der Abgasnachbehandlungseinrichtung 1 über das Zuführrohr 5 zugeleitete Abgas gelangt zunächst in eine Einströmkammer 9. Das Zuführrohr 5 verläuft dabei etwa parallel entlang den Katalysatorelementen 16, 18. Aufgrund der in Bezug auf die Abgasnachbehandlungseinrichtung 1 annähernd zentralen Anordnung der Einströmkammer 9 ergibt sich eine vorgegebene Laufstrecke bzw. Laufzeit für das Abgas, welche in vorteilhafter Weise eine Gleichverteilung von dem Abgas zugeführtem Reduktionsmittel ermöglicht. Im Fall von Harnstoff ist längs der Laufstrecke des Abgases im Zuführrohr 5 eine Hydrolyse mit Freisetzung von Ammoniak ermöglicht. Auf diese Weise gelangt optimal aufbereitetes Reduktionsmittel zusammen mit dem Abgas in die Einströmkammer 9.

Die Einströmkammer 9 ist beiderseits von je einem Bodenteil 10, 11 und umfangsseitig von einem hohlzylindrischen Mantelteil 12 begrenzt, wobei das Mantelteil 12 die Bodenteile 10, 11 in gasdichter Verbindung umschließt. Der Übersichtlichkeit halber ist das Mantelteil 12 nur zum Teil dargestellt; infolge des nicht gezeichneten Teils ist das Innere der Einströmkammer 9 ebenfalls sichtbar. Wie zu erkennen ist, durchsetzten die Katalysatorelemente 16, 18 bzw. deren Metallmantel 25 das erste Bodenteil 10 und die Katalysatorelemente 17, 19 das gegenüberliegende zweite Bodenteil 11 jeweils derart, dass die Katalysatorelemente 16, 17, 18, 19 mit ihrem jeweiligen einströmseitigen Ende in die Einströmkammer 9 ragen. Vorzugsweise ist eine Einschrauböffnung 26 zur Aufnahme eines Abgas- und/oder Temperatursensors im Mantelteil 12 der Einströmkammer 9 vorgesehen. Auf diese Weise können einströmseitig der Katalysatorelemente 16, 17, 18, 19 vorliegende Abgaseigenschaften erfasst werden.

Mangels einer anderweitigen Möglichkeit des Ausströmens wird in die Einströmkammer 9 geführtes Abgas einerseits durch die Katalysatorelemente 16, 18 und andererseits in der entgegengesetzten Richtung durch die Katalysatorelemente 17, 19 gezwungen. Durch die Katalysatorelemente 16, 17, 18, 19 gereinigte Abgase treten an deren ausströmseitigen Enden an gegenüberliegenden Endbereichen der Abgasnachbehandlungseinrichtung 1 aus. Zur Verdeutlichung ist das einströmseitige bzw. das ausströmseitige Ende des Katalysatorelements 17 mit der Bezugsziffer 20 bzw. 21 bezeichnet. Dabei dienen die Bodenteile 10, 11 der Einströmkammer 9 sowohl der Gasführung als auch der Lagerung der Katalysatorelemente 16, 17, 18, 19 an deren Einströmseite. An der Ausströmseite sind die Katalysatorelemente 16, 17, 18, 19 durch Zwischenböden 13, 14 in Position gehalten. Gemäß der vorliegenden Ausführungsform sind die ausströmseitigen Enden der Katalysatorelemente 16, 17, 18, 19 jeweils mit einem als Kappe ausgebildeten stirnseitig geschlossenen, jedoch umfangsseitig gelochten Auslasskäfig 24 versehen. Auf diese Weise kann eine gleichmäßige Verteilung des ausströmenden Abgases erzielt werden.

Der Ausströmbereich der zum Zuführrohr 5 hin orientierten, linken Katalysatorelemente 16, 18 wird einerseits vom ersten Verschlussdeckel 3 und andererseits vom ersten Zwischenboden 13 sowie vom umgebenden Gehäusemantel 2 begrenzt. Der Ausströmbereich der zum Auslassrohr 6 hin orientierten, rechten Katalysatorelemente 17, 19 wird einerseits vom zweiten Verschlussdeckel 4 und andererseits vom zweiten Zwischenboden 14 sowie vom umgebenden Gehäusemantel 2 begrenzt. Dabei ist es aus Gründen der Gasführung vorgesehen, den ersten Zwischenboden 13 geschlossen und den zweiten Zwischenboden 14 gelocht auszuführen. Zumindest für den ersten Zwischenboden 13 ist eine Abdichtung mit den durchgeführten Katalysatorelementen und Rohren vorgesehen.

In den Ausströmbereich der linken Katalysatorelemente 16, 18 ausströmendes Abgas wird durch ein Überleitungsrohr 23 entlang den Katalysatorelementen 16, 18 und annähernd parallel zum Zuführrohr 5 durch die Einströmkammer 9 hindurch auf die andere Seite der Abgasnachbehandlungseinrichtung 1 geleitet. Dort kann eine Vermischung mit aus dem Ausströmbereich der rechten Katalysatorelemente 17, 19 ausgeströmtem Abgas erfolgen. Dabei bilden das zweite Bodenteil 11 der Einströmkammer 9 sowie der zweite Zwischenboden 14 zusammen mit dem Gehäusemantel 2 eine Sammelkammer 22 für durch die Katalysatorelemente 16, 17, 18, 19 gereinigte Abgase. In der Sammelkammer 22 zusammengeführtes Abgas wird über das Auslassrohr 6 aus der Abgasnachbehandlungseinrichtung 1 abgeführt. Dabei ist in dieser Ausführungsform ein dritter, gelocht ausgeführter Zwischenboden 15 vorgesehen, der den Raum zwischen zweitem Bodenteil 11 der Einströmkammer und dem zweiten Zwischenboden 14 etwa im Verhältnis 2:1 teilt. Am dritten Zwischenboden 15 kann auch das Auslassrohr 6 befestigt sein, wodurch sich eine verbesserte Stabilität ergibt. Dieser dritte Zwischenboden 15 ist jedoch nur optional.

Gemäß einer alternativen, in den Figuren nicht gezeigten Ausführungsform kann das Überleitungsrohr 23 im Bereich zwischen dem ersten Zwischenboden 13 und dem ersten Bodenteil 10 gelocht ausgeführt sein. Weiter kann das Auslassrohr 6 im Bereich zwischen dem zweiten Zwischenboden 15 und dem dritten Zwischenboden 14 gelocht ausgeführt sein. Auf diese Weise kann eine wirksame Schalldämpfung erreicht werden, wodurch auf einen separaten Schalldampfer in der Abgasanlage eines entsprechenden Kraftfahrzeugs gegebenenfalls verzichtet werden kann. Die Schalldämpfung wird zusätzlich durch die Lochung der Zwischenböden 14, 15 unterstützt, wobei durch die Lochung gleichzeitig eine Gewichtsreduktion und Materialersparnis erzielt wird.

In der vorliegenden Ausführungsform wird über die Ausführung der Lochung von wenigstens einem dem zweiten und dem dritten Zwischenboden 14, 15 deren Strömungswiderstand derart justiert, dass eine Gleichverteilung der Abgasströme durch die beiderseits der Einströmkammer 9 angeordneten Katalysatorelemente 16, 18 einerseits und 17, 19 andererseits erzielt wird. Eine weitere Verbesserung der Strömungsverhältnisse und der akustischen Eigenschaften der Abgasnachbehandlungseinrichtung 1 wird erzielt, wenn das offene Ende des Auslassrohrs 6 stumpf und mit geringem Abstand vor dem dritten Zwischenboden 15 endet und dieser in diesem Bereich keine Perforierung aufweist.

In Bezug auf die verwendeten Materialien ist vorgesehen, die mit ungereinigtem Abgas in Berührung kommenden Teile in korrosionsbeständigem Edelstahl auszuführen. Dies betrifft hauptsächlich die Bodenteile 10, 11 und das Mantelteil 12, welche die Einströmkammer 9 begrenzen. Neben dem Zuführrohr 5 kann jedoch auch das Überleitungsrohr 23 aus korrosionsbeständigem Edelstahl gefertigt sein. Obschon das Auslassrohr 6 nur mit gereinigtem Abgas in Kontakt kommt, kann auch das Auslassrohr 6 in Edelstahl ausgeführt sein. Auf diese Weise wird ein größeres Maß an Gleichteilen und damit ebenfalls eine Kostenersparnis erzielt. Gleichfalls aus korrosionsbeständigem Edelstahl sind vorzugsweise die Ummantelungen der Katalysatorelemente 16, 17, 18, 19 gefertigt. Hingegen ist es vorgesehen, für den zweiten und dritten Zwischenboden 14, 15 analog zum Gehäusemantel 2 ein kostengünstigeres, weniger korrosionsbeständiges Material einzusetzen.

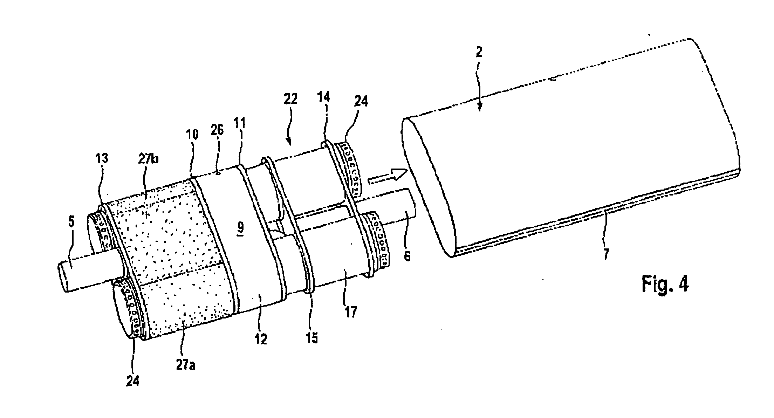

Nach Zusammenbau von Bestandteilen der Abgasnachbehandlungseinrichtung 1, wie anhand der Figuren 2 und 3 erläutert, wird ein Einbaumodul erhalten, welches als solches in den passend geformten hohlzylindrischen Gehäusemantel 2 eingeschoben werden kann, wie in Fig. 4 verdeutlicht. Dabei ist in Fig. 4 zusätzlich eine Dämmung bzw. Isolierung dargestellt, die im Bereich zwischen dem ersten Zwischenboden 13 und dem ersten Bodenteil 10 angeordnet ist und die Hohl- und Zwischenräume in diesem Bereich ausfüllt. Die vorzugsweise aus faserartigem Material ausgeführte Dämmung ermöglicht eine Verbesserung der Schalldämmung und verringert unerwünschte Wärmeverluste. Dabei ist es vorteilhaft, wenn die Dämmung bereichsweise unterschiedlich ausgeführt wird. Vorzugsweise wird in einem ersten Bereich 27a mit einer größeren Krümmung ein anderes Material eingesetzt als in einem den Zwischenraum zwischen den Katalysatorelementen 16, 18 ausfüllenden zweiten Bereich 27b. Auf diese Weise kann eine besonders günstige Kombination von thermischen Isoliereigenschaften und Strömungs- und Schalldämpfungseigenschaften erzielt werden. Obschon in Fig. 4 nicht dargestellt, kann auch für die Sammelkammer 22 eine Ausfüllung, gegebenenfalls teilweise, mit Dämmmaterial vorgesehen sein.

Fig. 5 zeigt eine Ansicht betreffend den Zusammenbau der Abgasnachbehandlungseinrichtung 1 nach Einschub des erhaltenen Moduls in den Gehäusemantel 2, wie in Fig. 4 skizziert. Mit Einsetzen der Verschlussdeckel 3, 4 und deren randseitiger Verbindung mit dem Gehäusemantel 2 sowie mit dem Zuführrohr 5 bzw. dem Auslassrohr 6 ist die bereits in Fig. 1 in einer Übersicht dargestellte Abgasnachbehandlungseinrichtung 1 im wesentlichen fertiggestellt. Für den fertig montierten Zustand ist ein im wesentlichen bündiges Anliegen des Gehäusemantels 2 an den Zwischenböden 13, 14, 15, den Bodenteilen 10, 11 und dem Mantelteil 12 der Einströmkammer 9 sowie den vorgesehenen Dämmmaterialbereichen 27a, 27b vorgesehen, wobei jedoch ein gasdichtes Anliegen nicht erforderlich ist. Vielmehr kann ein geringes Spaltmaß vorgesehen sein, wodurch das Aufschieben des Gehäusemantels 2 erleichtert wird.

Gemäß einer Ausführungsform wird als erstes höher korrosionsbeständiges Material hochlegierter Edelstahl eingesetzt. Unter einem hochlegierten Edelstahl wird ein Edelstahl mit einem Legierungsanteil von über 5 % verstanden. Gemäß einer Ausführungsform wird als korrosionsbeständiges Material ein hochlegierter Edelstahl mit einem Kohlenstoffanteil von unter 1 % und insbesondere unter 0,1 %, sowie mit einem Chromanteil von mindestens 12 % verwendet. Ein Beispiel für einen entsprechenden Stahl ist V4-Stahl. Gemäß einer Ausführungsform wird als korrosionsbeständiges Material ein ferritischer Stahl mit 12 % bis 18 % Chromgehalt wie beispielsweise X2CrTi12 (1.4512), X2CrTiNb18 (1.4509) oder X3CrTi17(1.4510) verwendet. Gemäß einer weiteren Ausführungsform weist der hochlegierte Edelstahl einen Titananteil von über 1 % auf. Dieses höher korrosionsbeständige Material wird gemäß einer Ausführungsform für die mit ungereinigtem Abgas in Kontakt kommenden Teile wie insbesondere das Zuführrohr 5 und die Einströmkammer 9 (und damit die Bodenteile 10, 11 und das Mantelteil 12) verwendet. Weiter kann dieses Material beispielsweise für die Metallmäntel 25 der Katalysatorelemente 16, 17, 18, 19, das Überleitungsrohr 23 und das Auslassrohr 6 verwendet werden.

Gemäß einer Ausführungsform wird als zweites geringer korrosionsbeständiges Material niedriglegierter Stahl und insbesondere feueraluminiertes Feinblech verwendet. Dieses kann gemäß einer Ausführungsform einen Aluminium-Silicium-Überzug von 50 bis 200 g/qm aufweisen. Dieser Überzug kann beidseitig vorgesehen sein. Zusätzlich kann das Material durch wenigstens eines von Beölung und Passivierung (wie z.B. Chromatierung) vor Korrosion geschützt sein. Gemäß einer Ausführungsform beträgt das Aluminium-Silicium Verhältnis 90% Al zu 10% Si. Dieses geringer korrosionsbeständige Material wird gemäß einer Ausführungsform für die Zwischenböden 13, 14, 15, die Verschlussdeckel 2, 3, den Gehäusemantel 2, das Auslassrohr 6 und das Überleitungsrohr 23 verwendet.

Gemäß einer Ausführungsform ist zumindest der Abschnitt des Überleitungsrohrs 23 innerhalb der Einströmkammer 9 aus dem ersten höher korrosionsbeständigen Material gebildet oder von einem Mantel aus diesem Material umgeben.

Weiter ist gemäß einer alternativen Ausführungsform an den Kontaktstellen zwischen höher korrosionsbeständigem Material und geringer korrosionsbeständigem Material ein isolierender und damit elektrischen Strom nicht leitender Abstandshalter (in den Figuren nicht gezeigt) angeordnet. Dieser isolierende Abstandshalter kann beispielsweise in Form eines Lackes, einer Folie, eines Klebers oder einer Beschichtung ausgebildet sein. Hierdurch wird das Risiko von Korrosion an diesen Kontaktstellen reduziert. Relevante Kontaktstellen sind beispielsweise die Anlageflächen zwischen dem Zuführrohr 5 und dem Verschlussdeckel 3 sowie dem ersten Zwischenboden 13, die Anlageflächen zwischen den Katalysatorelementen 16, 17, 18, 19 und den Zwischenböden 13, 14 und 15, sowie die Anlageflächen zwischen den Bodenteilen 10, 11 bzw. dem Mantelteil 12 und dem Gehäusemantel 2. Ob sich zwischen Auslassrohr 6 bzw. Überleitungsrohr 23 und den Zwischenböden 13, 14 und 15 bzw. dem Verschlussdeckel 4 oder zwischen Überleitungsrohr 23 und den Bodenteilen 10, 11 weitere relevante Kontaktstellen befinden, hängt davon ab, ob für das Auslassrohr 6 bzw. Überleitungsrohr 23 Material höherer oder geringerer Korrosionsbeständigkeit verwendet wird.

Die Abgasnachbehandlungseinrichtung ist insbesondere für Fahrzeuge mit Dieselmotor geeignet.

## Patentansprüche

1. Abgasnachbehandlungseinrichtung eines Kraftfahrzeugs, welche einen hohlzylindrischen Gehäusemantel (2) aufweist, in dessen Innerem ein Abgaskatalysator sowie eine Einströmkammer (9) zur Aufnahme von durch den Abgaskatalysator zu reinigendem Abgas angeordnet sind, wobei die Einströmkammer (9) von einem ersten Bodenteil (10), einem dem ersten Bodenteil (10) mit Abstand gegenüberliegenden zweiten Bodenteil (11) begrenzt ist, wobei die Einströmkammer (9) ferner von einem die Bodenteile (10, 11) in gasdichter Verbindung umschließenden Mantelteil (12) begrenzt ist,
**dadurch gekennzeichnet, dass**
das erste und das zweite Bodenteil (10, 11) sowie das Mantelteil (12) aus einem ersten Material mit einer hohen Korrosionsbeständigkeit und der Gehäusemantel (2) aus einem zweiten Material mit einer demgegenüber geringeren Korrosionsbeständigkeit gefertigt sind.

2. Abgasnachbehandlungseinrichtung nach Anspruch 1, wobei ein einströmseitiges Ende (20) des Abgaskatalysators in der Einströmkammer (9) angeordnet ist.

3. Abgasnachbehandlungseinrichtung nach einem der Ansprüche 1 oder 2, wobei ein in die Einströmkammer (9) ausmündendes Zuführrohr (5) vorgesehen ist, über welches mit einem Reduktionsmittel angereichertes Abgas in die Einströmkammer (9) eingebracht werden kann.

4. Abgasnachbehandlungseinrichtung nach einem der Ansprüche 1 bis 3, wobei diese eine an die Einströmkammer (9) angrenzende und zur Aufnahme von durch den Abgaskatalysator gereinigtem Abgas vorgesehene Sammelkammer (22) aufweist,
wobei ein Überleitungsrohr (23) vorgesehen ist, über welches vom Abgaskatalysator gereinigtes Abgas von einer Ausströmseite des Abgaskatalysators in die Sammelkammer (22) geleitet werden kann.

5. Abgasnachbehandlungseinrichtung nach einem der Ansprüche 3 oder 4, wobei das Zuführrohr (5) und/oder das Überleitungsrohr (23) sich über den wesentlichen Teil ihrer Länge innerhalb des Gehäusemantels (2) entlang des Abgaskatalysators erstrecken.

6. Abgasnachbehandlungseinrichtung nach einem der Ansprüche 1 bis 5,
wobei diese zur Aufnahme eines aus wenigstens zwei separaten Katalysatorelementen (16, 17; 18, 19) gebildeten Abgaskatalysators ausgebildet ist,
wobei diese derart ausgebildet ist, dass ein erstes und ein zweites der wenigstens zwei Katalysatorelemente (16, 17; 18, 19) ausgehend von der Einströmkammer (9) in entgegengesetzten Richtungen von dem zu reinigenden Abgas durchströmt werden können.

7. Abgasnachbehandlungseinrichtung nach einem der Ansprüche 5 oder 6, wobei der Gehäusemantel (2) aus einem Blechzuschnitt mit zwei einander gegenüberliegenden Seiten gefertigt ist, wobei die einander gegenüberliegenden Seiten unter Bildung eines Hohlzylinders durch Falzen miteinander verbunden sind.

8. Abgasnachbehandlungseinrichtung nach Anspruch 1, nacheinander entlang des Strömungsweges des Abgases aufweisend:
ein Zuführrohr (5) zum Zuführen von zu reinigendem Abgas; die Einströmkammer (9);
wenigstens ein Katalysatorelement (16, 17, 18, 19) zum Reinigen des Abgases;
eine Sammelkammer (22) zum Sammeln des durch das wenigstens eine Katalysatorelement (16, 17, 18, 19) gereinigten Abgases; sowie
ein Auslassrohr (6) zum Abführen von gereinigtem Abgas;
wobei wenigstens das Zuführrohr (5) und die Einströmkammer (9) aus einem ersten, gegenüber dem zu reinigenden Abgas höher korrosionsbeständigen Material gebildet sind; und
wobei wenigstens die Sammelkammer (22) aus einem zweiten, gegenüber dem zu reinigenden Abgas geringer korrosionsbeständigen Material gebildet ist.

9. Abgasnachbehandlungseinrichtung nach Anspruch 8,
wobei das erste höher korrosionsbeständige Material ein ferritischer Stahl mit einem Chromanteil von mindestens 10 % und insbesondere mindestens 12 %, oder ein Edelstahl mit einem Molybdänanteil von mindestens 2 % ist; und wobei das zweite geringer korrosionsbeständige Material ein Stahl mit einem Chromanteil von unter 10 % und einem Molybdänanteil von unter 2 % ist.

10. Abgasnachbehandlungseinrichtung nach Anspruch 8 oder 9,
wobei das erste höher korrosionsbeständige Material ein Stahl mit einem Legierungsanteil von über 10 % ist; und wobei das zweite geringer korrosionsbeständige Material ein Stahl mit einem Legierungsanteil von unter 5 % ist.

11. Abgasnachbehandlungseinrichtung nach einem der Ansprüche 8 bis 10,
wobei die Einströmkammer (9) und die Sammelkammer (22) zueinander benachbart angeordnet sind; und/oder wobei die Einströmkammer (9) zumindest teilweise und insbesondere vollständig innerhalb der Sammelkammer (22) angeordnet ist.

12. Abgasnachbehandlungseinrichtung nach einem der Ansprüche 8 bis 11,
wobei in dem Zuführrohr (5) eine Zugabevorrichtung zum Einspritzen von Ammoniak-freisetzendem Reduktionsmittel angeordnet ist; und
wobei das wenigstens ein Katalysatorelement (16, 17, 18, 19) zur selektiven Reduktion von Stickoxiden mittels Ammoniak ausgebildet ist.

13. Abgasnachbehandlungseinrichtung nach einem der Ansprüche 8 bis 12,
aufweisend mehrere Katalysatorelemente (16, 17, 18, 19) zum Reinigen des Abgases;
wobei die Einströmkammer (9) ausgebildet ist, das zu reinigende Abgas auf die Katalysatorelemente (16, 17, 18, 19) zu verteilen.

14. Abgasnachbehandlungseinrichtung nach einem der Ansprüche 8 bis 13, wobei das wenigstens eine Katalysatorelement (16, 17, 18, 19) ein einströmseitiges Ende sowie ein ausströmseitiges Ende aufweist, und das einströmseitige Ende in der Einströmkammer (9) und das ausströmseitige Ende in der Sammelkammer (22) angeordnet ist.

15. Abgasnachbehandlungseinrichtung nach einem der Ansprüche 8 bis 14, wobei an Kontaktstellen zwischen dem ersten höher korrosionsbeständigen Material und dem zweiten geringer korrosionsbeständigen Material ein isolierender Abstandshalter angeordnet ist.

## Claims

1. An exhaust gas after treatment apparatus in a motor vehicle, comprising a hollow cylindrical casing shell (2), inside of which an exhaust gas catalytic converter and an inflow chamber (9), for receiving exhaust gas to be purified by the exhaust gas catalytic converter, are arranged,
wherein the inflow chamber (9) is defined by a first bottom portion (10), a second bottom portion (11) arranged spaced apart from, and opposite to the first bottom portion (10),
wherein the inflow chamber (9) is further defined by a shell portion (12) encompassing the bottom portions (10, 11) in a gas tight connection,
**characterized in that**
the first and the second bottom portions (10, 11) and the shell portion (12) are manufactured from a first material having a high corrosion resistance, and the casing shell (2) is manufactured from a second material having a comparatively lower corrosion resistance.

2. The exhaust gas after treatment apparatus according to claim 1, wherein an inflow-side end (20) of the exhaust gas catalytic converter is arranged in the inflow chamber (9).

3. The exhaust gas after treatment apparatus according to one of claims 1 or 2, wherein a supply pipe (5) leading into the inflow chamber (9) is provided, through which supply pipe exhaust gas enriched with a reducing agent can be introduced into the inflow chamber (9).

4. The exhaust gas after treatment apparatus according to one of claims 1 to 3, comprising a collection chamber (22) adjacent to the inflow chamber (9) and provided for receiving exhaust gas purified by the exhaust gas catalytic converter, wherein a transfer pipe (23) is provided through which exhaust gas purified by the exhaust gas catalytic converter can be led from an outflow side of the exhaust gas catalytic converter into the collection chamber (22).

5. The exhaust gas after treatment apparatus according to one of claims 3 or 4, wherein the supply pipe (5) and/or the transfer pipe (23) extend across a substantial portion of its length within the casing shell (2) along the exhaust gas catalytic converter.

6. The exhaust gas after treatment apparatus according to one of claims 1 to 5, which is adapted for accommodating an exhaust gas catalytic converter formed from at least two separate catalytic converter elements (16, 17; 18, 19) which are provided such that a first and a second of the at least two catalytic converter elements (16, 17; 18, 19) may be flown through in opposite directions by exhaust gas to be purified coming from the inflow chamber (9).

7. The exhaust gas after treatment apparatus according to one of claims 5 or 6, wherein the casing shell (2) is manufactured from a metal sheet cut part having two sides arranged opposite to each other, wherein the sides arranged opposite to each other are connected with each other by crimping to form a hollow cylinder.

8. An exhaust gas after treatment apparatus according to claim 1, comprising, successively along the flow path of the exhaust gas:
a supply pipe (5) for supplying exhaust gas to be purified;
the inflow chamber (9);
at least one catalytic converter element (16, 17, 18, 19) for purifying the exhaust gas;
a collection chamber (22) for collecting the exhaust gas purified by the at least one catalytic converter element (16, 17, 18, 19); and
an exhaust pipe (6) for discharging purified exhaust gas;
wherein at least the supply pipe (5) and the inflow chamber (9) are manufactured from a first material having a higher corrosion resistance against the exhaust gas to be purified; and
wherein at least the collection chamber (22) is formed from a second material having a lower corrosion resistance against the exhaust gas to be purified.

9. The exhaust gas after treatment apparatus according to claim 8,
wherein the first material having the higher corrosion resistance is a ferritic steel having a chromium proportion of at least 10 % and in particular at least 12 %, or is a high-grade steel having a molybdenum proportion of at least 2 %; and
wherein the second material having the lower corrosion resistance is a steel having a chromium proportion of less than 10 % and having a molybdenum proportion of less than 2 %.

10. The exhaust gas after treatment apparatus according to 8 or 9,
wherein the first material having higher corrosion resistance is a steel having an alloy proportion of more than 10 %; and
wherein the second material having lower corrosion resistance is a steel having an alloy proportion of less than 5 %.

11. The exhaust gas after treatment apparatus according to one of claims 8 to 10,
wherein the inflow chamber (9) and the collection chamber (22) are arranged adjacent to each other; and/or
wherein the inflow chamber (9) is at least partially and in particular entirely arranged within the collection chamber (22).

12. The exhaust gas after treatment apparatus according to one of claims 8 to 11,
wherein an adding apparatus for injecting an ammonia releasing reducing agent is arranged in the supply pipe (5); and
wherein the at least one catalytic converter element (16, 17, 18, 19) is adapted to selectively reduce nitrogen oxides by use of ammonia.

13. The exhaust gas after treatment apparatus according to one of claims 8 to 12,
comprising plural catalytic converter elements (16, 17, 18, 19) for purifying the exhaust gas;
wherein the inflow chamber (9) is adapted to distribute the exhaust gas to be purified to the catalytic converter elements (16, 17, 18, 19).

14. The exhaust gas after treatment apparatus according to one of claims 8 to 13, wherein the at least one catalytic converter element (16, 17, 18, 19) has an inflow-side end as well as an outflow-side end, wherein the inflow-side end is arranged in the inflow chamber (9) and the outflow-side end is arranged in the collection chamber (22).

15. The exhaust gas after treatment apparatus according to one of claims 8 to 14, wherein an insulating spacer is arranged at contact locations between the first material having a higher corrosion resistance and the second material having a lower corrosion resistance.

## Revendications

1. Dispositif de retraitement des gaz d'échappement d'un véhicule automobile, qui présente un carter (2) cylindrique creux à l'intérieur duquel sont disposés un catalyseur des gaz d'échappement et une chambre d'admission (9) permettant de recevoir des gaz d'échappement à purifier par le catalyseur des gaz d'échappement, dans lequel la chambre d'admission (9) est délimitée par une première partie de fond (10) et une seconde partie de fond (11) située à l'opposé de la première partie de fond (10) avec un écart, dans lequel la chambre d'admission est en outre délimitée par une partie d'enveloppe (12) entourant les parties de fond (10, 11) selon une relation étanche au gaz, **caractérisé en ce que** la première et la seconde parties de fond (10, 11) ainsi que la partie d'enveloppe (12) sont fabriquées à partir d'un premier matériau présentant une grande résistance à la corrosion et **en ce que** le carter (2) est fabriqué à partir d'un second matériau présentant une résistance à la corrosion plus faible que le premier.

2. Dispositif de retraitement des gaz d'échappement selon la revendication 1, dans lequel une extrémité (20) du catalyseur des gaz d'échappement côté admission est disposée dans la chambre d'admission (9).

3. Dispositif de retraitement des gaz d'échappement selon l'une des revendications 1 ou 2, dans lequel est prévu un tube d'alimentation (5) débouchant dans la chambre d'admission (9), par lequel le gaz d'échappement enrichi avec un agent réducteur peut être introduit dans la chambre d'admission (9).

4. Dispositif de retraitement des gaz d'échappement selon l'une des revendications 1 à 3, dans lequel celui-ci présente une chambre de collecte (22) contiguë à la chambre d'admission (9) et prévue pour recevoir les gaz d'échappement purifiés par le catalyseur des gaz d'échappement, dans lequel est prévu un tube de transfert (23) par lequel les gaz d'échappement purifiés par le catalyseur de gaz d'échappement peuvent être dirigés depuis un côté sortie du catalyseur des gaz d'échappement dans la chambre de collecte (22).

5. Dispositif de retraitement des gaz d'échappement selon l'une des revendications 3 ou 4, dans lequel le tube d'alimentation (5) et/ou le tube de transfert (23) s'étendent sur la partie essentielle de leur longueur le long du catalyseur des gaz d'échappement au sein du carter (2).

6. Dispositif de retraitement des gaz d'échappement selon l'une des revendications 1 à 5, dans lequel celui-ci est conçu pour recevoir un catalyseur des gaz d'échappement formé d'au moins deux éléments de catalyseur séparés (16, 17 ; 18,19), dans lequel celui-ci est exécuté de façon telle qu'un premier et un second des éléments de catalyseurs (16, 17 ; 18, 19), au moins au nombre de deux, peuvent être parcourus par les gaz d'échappement à purifier dans des directions opposées en partant de la chambre d'admission (9).

7. Dispositif de retraitement des gaz d'échappement selon l'une des revendications 5 ou 6, dans lequel le carter (2) est fabriqué à partir d'une découpe de tôle présentant deux côtés opposés l'un à l'autre, les côtés opposés l'un à l'autre étant reliés en les sertissant ensemble pour former un cylindre creux.

8. Dispositif de retraitement des gaz d'échappement selon la revendication 1, présentant les uns à la suite des autres le long de la trajectoire d'écoulement des gaz d'échappement :
un tube d'alimentation (5) pour amener le gaz d'échappement à purifier ;
la chambre d'admission (9) ;
au moins un élément de catalyseur (16, 17, 18, 19) destiné à purifier les gaz d'échappement ;
une chambre de collecte (22) destinée à recueillir les gaz d'échappement purifiés par l'élément de catalyseur (16, 17 ; 18, 19), au moins au nombre de un ; ainsi que un tube de sortie (6) destiné à évacuer les gaz d'échappement purifiés ;
dans lequel au moins le tube d'alimentation (5) et la chambre d'admission (9) sont fabriqués à partir d'un premier matériau résistant mieux à la corrosion vis à vis des gaz d'échappement à purifier ; et dans lequel au moins la chambre de collecte (22) est fabriquée à partir d'un second matériau d'un matériau résistant moins à la corrosion vis à vis des gaz d'échappement à purifier.

9. Dispositif de retraitement des gaz d'échappement selon la revendication 8, dans lequel le premier matériau plus résistant à la corrosion est un acier ferritique présentant une teneur en chrome au moins égale à 10 % et en particulier au moins égale à 12 %, ou un acier spécial présentant une teneur en molybdène au moins égale à 2 % ; et dans lequel le second matériau moins résistant à la corrosion est un acier présentant une teneur en chrome inférieure à 10 % et une teneur en molybdène inférieure à 2 %.

10. Dispositif de retraitement des gaz d'échappement selon la revendication 8 ou 9, dans lequel le premier matériau plus résistant à la corrosion est un acier présentant une teneur en alliage supérieure à 10 % ; et dans lequel le second matériau moins résistant à la corrosion est un acier présentant une teneur en alliage inférieure à 5 %.

11. Dispositif de retraitement des gaz d'échappement selon l'une des revendications 8 à 10, dans lequel la chambre d'admission (9) et la chambre de collecte (22) sont disposées l'une à côté de l'autre ; et/ou dans lequel la chambre d'admission (9) est disposée au moins partiellement, et en particulier entièrement, au sein de la chambre de collecte (22).

12. Dispositif de retraitement des gaz d'échappement selon l'une des revendications 8 à 11, dans lequel dans le tube d'alimentation (5) est disposé un dispositif additif permettant d'injecter un agent réducteur libérant de l'ammoniac ; et
dans lequel l'élément de catalyseur (16, 17, 18, 19), au moins au nombre de un, est exécuté pour effectuer une réduction sélective des oxydes d'azote au moyen d'ammoniac.

13. Dispositif de retraitement des gaz d'échappement selon l'une des revendications 8 à 12, présentant plusieurs éléments de catalyseur (16, 17, 18, 19) permettant de purifier les gaz d'échappement ;
dans lequel la chambre d'admission (9) est exécutée pour répartir les gaz d'échappement à purifier sur les éléments de catalyseur (16, 17, 18, 19).

14. Dispositif de retraitement des gaz d'échappement selon l'une des revendications 8 à 13, dans lequel l'élément de catalyseur (16, 17, 18, 19), au moins au nombre de un, présente une extrémité côté admission et une extrémité côté sortie, l'extrémité côté admission étant disposée dans la chambre d'admission (9) et l'extrémité côté sortie étant disposée dans la chambre de collecte (22).

15. Dispositif de retraitement des gaz d'échappement selon l'une des revendications 8 à 14, dans lequel une pièce d'écartement isolante est disposée au niveau de points de contact entre le premier matériau plus résistant à la corrosion et le second matériau moins résistant à la corrosion.
